# DEMANDE DE BREVET EUROPEEN

(11) **EP 0 974 451 A1**
(43) Date de publication de la demande: **26.01.2000**
(21) Numéro de dépôt: 99401712.7
(22) Date de dépôt: 08.07.1999
(51) Int. Cl.: B32B 17/10, C03C 27/12

(54) **Vitrage feuilleté de sécurité**

(30) Priorité: 24.07.1998 FR 9809477
(71) Demandeur: SAINT-GOBAIN VITRAGE, 92400 Courbevoie (FR)
(72) Inventeur: Barbier, Luc, 3360 Korbeek-Lo (BE); Kinet, Laurent, 5170 Profondeville (BE); Messere, Rino, 4577 Modave (Strée) (BE); Wieers, Marc, 3920 Lommel (BE)
(74) Mandataire: Muller, René

(57) **Abrégé**

L'invention concerne un vitrage feuilleté (1) constitué d'au moins un panneau (2,3) transparent associé à un film composite (4) constitué d'au moins une couche d'un matériau organique thermoplastique ou thermodurcissable.

Selon l'invention, le vitrage feuilleté est tel qu'au moins une couche du film composite (4) déborde sur au moins une partie (5) d'au moins un côté du panneau transparent.

## Description

L'invention concerne un vitrage feuilleté constitué d'au moins un panneau transparent associé à un film composite constitué d'au moins une couche d'un matériau organique thermoplastique ou thermodurcissant et sa fixation à une structure porteuse et/ou à un vitrage voisin, le vitrage étant destiné à protéger les bâtiments et les véhicules.

L'invention sera plus particulièrement décrite pour un vitrage feuilleté de sécurité destiné à la constitution de façade de bâtiment, mais elle ne se limite pas à ce type d'application, tout type de vitrage feuilleté fixé à une structure porteuse et/ou à un vitrage voisin entre également dans le cadre de l'invention.

Les vitrages de sécurité feuilletés constitués d'au moins un panneau transparent, en particulier d'au moins un panneau en verre, sont associés à une résine en général transparente. Ils sont soit obtenus par couche coulée à froid, soit par l'association de feuilles thermoplastiques comme par exemple en polyvinylbutyral (PVB).

Il est également connu d'associer un film composite constitué d'au moins une couche d'un matériau organique thermoplastique ou thermodurcissant et d'au moins une autre couche d'un matériau organique ou non, ledit film composite apportant alors d'autre fonction de type, par exemples, de protection mécanique renforcée, de décoration ou de contrôle solaire.

La fixation d'éléments vitrés sur une structure porteuse est généralement réalisée soit par leur pourtour à l'aide de profilés périphériques soit par des points d'accrochage mécanique situés usuellement à chacun des coins du vitrage.

L'invention s'intéresse plus particulièrement au premier type de fixation des vitrages, c'est-à-dire par leur pourtour, et en particulier par une partie de leur pourtour, à l'aide de profilés périphériques. Ce type de fixation présente l'avantage, par rapport aux points d'accrochage mécanique, d'éviter le perçage des vitrages, un tel perçage fragilisant le vitrage et nécessitant ensuite la conception de liaison par points qui doit prendre en compte différentes exigences du point de vue mécanique et sécurité.

Cependant, une fixation par le pourtour du vitrage, et en particulier par une partie de leur pourtour, doit également répondre à différentes exigences du point de vue mécanique, sécurité et esthétique. Lors, par exemple, d'une fixation par collage d'un profilé servant de pièce de fixation, il est nécessaire que le collage garantisse une fixation solide et efficace et, en particulier, supporte sans risque de rupture le poids du vitrage. De telles fixations sont déjà connues de l'homme du métier grâce aux nombreuses colles existant sur le marché.

L'invention s'intéresse aussi à un type de fixation des vitrages par point, c'est-à-dire par un perçage du vitrage, et en particulier par un système d'attaches ponctuelles (Vitrage Extérieur Attaché, VEA), avec ou sans reprise latérale du vitrage, chaque attache ponctuelle étant articulée à une structure portante.

Par ailleurs, il est nécessaire lors de certaines applications telles que la constitution de façades de bâtiment de pouvoir assurer une tenue du vitrage en cas de casse d'un des panneaux transparents. Or, ce type de fixation n'est pas particulièrement adapté pour assurer une telle sécurité en particulier lorsque la fixation est réalisée sur une partie de la périphérie du vitrage telle que, par exemple, sur les côtés latéraux du vitrage. En effet, lors de la casse du vitrage, la répartition des efforts au niveau des pièces de fixation est modifiée du fait que c'est le film composite qui retient les morceaux par ces propriétés d'adhésion. La résistance à fournir est ainsi sensiblement augmentée, d'où un risque important de chute du vitrage.

Le but de l'invention est alors de pallier ces inconvénients en proposant un nouveau type de vitrage dont "l'accrochage" à une structure porteuse et/ou à un vitrage voisin est sûre et pouvant par ailleurs, apporter d'autres avantages.

L'invention a pour objet un vitrage constitué d'au moins un panneau transparent associé à un film composite constitué d'au moins une couche d'un matériau organique thermoplastique ou thermodurcissable, ledit vitrage étant tel qu'au moins une couche du film composite déborde sur au moins une partie d'au moins un côté ou perçage du panneau transparent. Par panneau transparent, on entend tout type de panneau en verre plat ou bombé avec ou sans fines couches inorganique ou organique sur chacune des faces du panneau tel que, par exemples, panneau en verre feuilleté, en verre armé, en verre trempé ainsi que tout autre type de panneau transparent coloré ou non, muni ou non de couches fonctionnelles de type, par exemples, anti-salissure , réfléchissante ou anti-réfléchissante ou tout type de vitrage actif tel que, par exemple, un vitrage à cristaux liquide.

Pour constituer la couche de matériau organique thermoplastique ou thermodurcissable sont bien adaptés à cet effet les polyvinylbutyral (PVB), polyuréthane (PU), polyéthylène (PE), polystyrène (PS), polychlorure de vinyle (PVC), polyacrylate (PA), polyméthacrylate (PMA), polyéthylèneoxyde (PEO), polydifluorovinyldène (PVDF), polyvinylfluoré (PVF), polytéréphtalate d'éthylène (PET), polypropylène (PP), polyacétate de vinyle (PAV), copolymère éthylène/acétate de vinyle (PEVA ou EVA), polycyclooléfines (PCO), polyesters (PES), polyacrylamide (PAM), polycarbonate (PC), résines acryliques ainsi que les copolymères correspondants, résines chargées en particules inorganiques, résines conductrices telles que des résines acrylique ou époxyde dopées en ions conducteurs. La couche peut comporter une couche de décor d'au moins une couleur et/ou de masquage sur tout ou partie de sa surface. Chacune de ces couches peut être percée ou non de trous de formes variables ou identiques.

Ainsi, le vitrage selon l'invention présente sur au moins une partie de sa périphérie des parties débordantes du film composite, ces parties étant constituées de tout ou partie des différentes couches constituant le film composite. De cette manière, l'épaisseur des parties débordantes est inférieure ou égale à l'épaisseur du film composite.

Selon une réalisation préférée de l'invention, le film composite comporte au moins une couche rigide associée au panneau transparent par l'intermédiaire de la couche de matériau organique. Cette couche rigide se caractérise par un module de Young plus élevé que les autres couches du composite, par exemple utilisées comme adhésifs au panneau transparent. L'épaisseur de cette couche rigide est, de préférence, de l'ordre de 0,1 mm à 25 mm.

Selon une réalisation avantageuse de l'invention, la couche rigide a une résistance à l'élongation comprise entre 1% et 500% suivant le matériau utilisé, ayant un module d'Young au moins égal à 0,1 MPa. De cette manière, la résistance mécanique générale du vitrage est renforcée.

Selon une variante de l'invention, la couche rigide est constituée d'une feuille de matériau thermoplastique tel qu'à base de polytéréphtalate d'éthylène (PET) ou de polypropylène (PP). De tels matériaux permettent d'obtenir une résistance mécanique, telle qu'une résistance au déchirement, élevée au sens de l'invention.

Selon une autre variante de l'invention, la couche rigide est constituée d'une feuille métallique percée ou non de trous de formes variables ou identiques.

Cette couche rigide peut être constituée d'un ou plusieurs fils tissés ou non tissés.

Selon une réalisation préférée de l'invention, seule la couche rigide déborde du panneau transparent. De cette manière, la partie débordante du film présente une épaisseur plus faible que l'épaisseur totale du film composite et présente une résistance mécanique élevée au sens de l'invention.

Selon une réalisation de l'invention, la partie du film composite débordant du panneau transparent est comprise entre 2 et 2000 mm et, de préférence. entre 4 et 25 mm.

Selon une réalisation préférée de l'invention, le vitrage est constitué d'au moins deux panneaux transparents séparés par le film composite.

L'invention propose également le vitrage tel que précédemment décrit muni d'au moins une pièce de fixation pour accrocher ledit vitrage à une structure porteuse et/ou à un vitrage voisin.

Selon une réalisation de l'invention, au moins une pièce destinée à la fixation reliant ledit vitrage à une structure porteuse et/ou à un vitrage voisin est fixée au moins aux parties débordantes du film composite.

De cette manière, le film composite reprend le poids des panneaux transparents par les parties débordantes. Ainsi, il est possible, par exemple, de renforcer l'étanchéité entre les vitrages et la structure porteuse telle que du gros oeuvre par exemple, ou entre les vitrages eux-mêmes en positionnant une pièce de fixation sur deux parties débordantes voisines de films composites.

Il est également possible de fixer les vitrages par des points d'attaches ponctuelles qui fixent le film composite débordant à l'intérieur de perçages réalisés sur les panneaux transparents. Ce type de fixation présente l'avantage, par rapport aux points d'attaches ponctuelles sans reprise d'un film intercalaire d'augmenter la résistance mécanique de la conception qui doit prendre en compte différentes exigences du point de vue mécanique et sécurité.

Selon une réalisation préférée de l'invention, la pièce de fixation est fixée, en outre, sur au moins un bord d'au moins un panneau transparent.

De cette façon, l'ensemble du vitrage est porté par le ou les panneaux transparents, la pièce de fixation pouvant être fixée au panneau transparent par tout moyen connu de l'homme du métier tel que, par exemple, par collage. Ainsi, le film composite permet de renforcer le maintient et d'assurer une fonction de sécurité anti-chute en cas de bris du vitrage.

En effet, en cas de casse, le film composite retient les morceaux du panneau transparent par ses propriétés d'adhésion et reste figé mécaniquement sur les bords du vitrage par les pièces de fixation.

Selon une réalisation avantageuse de l'invention, la partie débordante du film composite est non tendue, c'est-à-dire que entre la fixation de la partie débordante du film composite à la pièce de fixation et le bord du panneau transparent, le film composite n'est pas mis en contrainte, la pièce de fixation étant également fixée au moins sur un bord d'au moins un panneau transparent, par exemple par collage Ainsi, une telle réalisation permet d'éviter un vieillissement rapide du film composite et augmente sa longévité lorsque celui-ci 'sera mis en contrainte lors, par exemple, de la casse d'un des panneaux transparents et/ou de la rupture de l'adhésion du collage entre le panneau transparent et la pièce de fixation, le film contraint permettant alors le maintient en place du vitrage et évite sa chute.

Selon une variante préférée de l'invention, la pièce de fixation est constituée 'de deux pièces complémentaires positionnées de part et d'autre de la partie débordante du film composite et au moins une des deux pièces est collée au bord d'un panneau transparent. De cette manière, la partie débordante du film composite est prise en sandwich entre les deux pièces complémentaires constituant la pièce de fixation et peut être maintenue, par exemples, par simple pression, par perçage ou par collage.

L'invention a également pour objet l'application du vitrage prédéfini.

Une première application concerne la constitution de façades de bâtiment. Ce type d'application présente l'avantage de réaliser une façade haute sécurité et en particulier au niveau de la chute de vitrages en cas de casse ou d'affaiblissement de la fixation des panneaux transparents.

Une seconde application concerne la constitution de vitrages pour véhicules automobiles.

Les caractéristiques avantageuses de l'invention apparaissent plus clairement dans la description détaillée ci-après d'exemples de réalisation de l'invention non limitatifs illustrés par les figures qui représentent :
- fig. 1 : vue de face d'un vitrage feuilleté selon l'invention.
- fig. 2 : coupe selon A-A du vitrage feuilleté de la figure 1.
- fig. 3 : coupe verticale d'un premier mode de réalisation d'un vitrage feuilleté selon l'invention.
- fig. 4 : coupe verticale d'un second mode de réalisation d'un vitrage feuilleté selon l'invention.
- fig. 5 : coupe verticale d'un troisième mode de réalisation d'un vitrage feuilleté selon l'invention.
- fig. 6 : coupe verticale d'un quatrième mode de réalisation d'un vitrage feuilleté selon l'invention.

On précise que les proportions entre les divers éléments représentés ne sont pas rigoureusement respectées dans ces figures afin d'en faciliter la lecture.

Le vitrage feuilleté 1 est constitué de deux feuilles de verre 2 et 3 de 4 mm d'épaisseur chacune et assemblées par l'intermédiaire d'un film composite 4. Le film composite 4 est obtenu par superposition d'une couche de PVB de 0,76 mm d'épaisseur, d'une couche de PET de 0,4 mm d'épaisseur et d'une autre couche de PVB de 0,76 mm d'épaisseur. Le vitrage feuilleté est réalisé selon les procédés habituels de feuilletage de vitrage, c'est-à-dire par calandrage et autoclave.

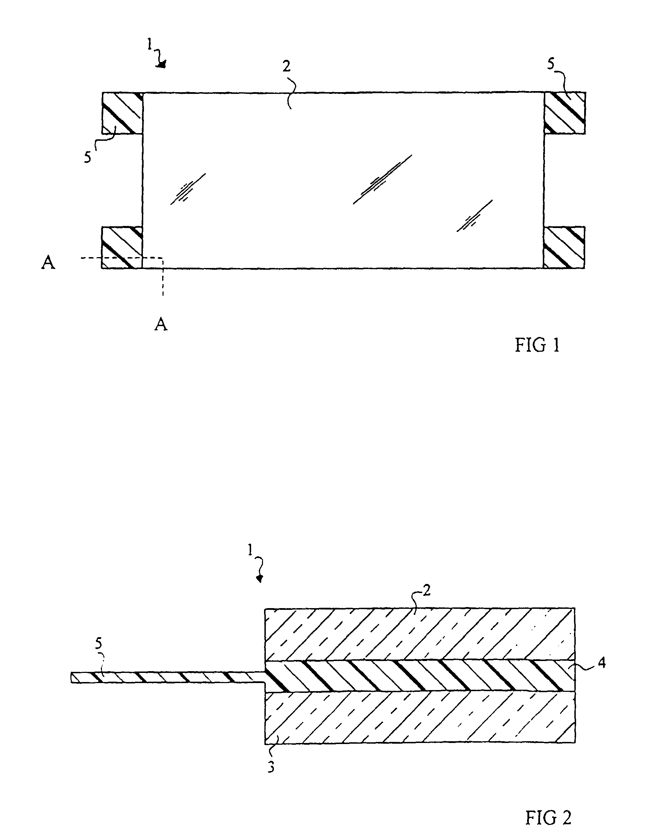

Les figures 1 et 2 représentent un vitrage feuilleté 1 selon l'invention. Selon ces représentations, on observe que une partie du film composite 4 déborde en quatre parties 5 du pourtour des feuilles de verre 2 et 3. L'épaisseur des parties 5 est inférieure à l'épaisseur du film composite 4 pris en sandwich entre les deux feuilles de verres 2 et 3.

Dans la représentation de la figure 2, seule la couche du milieu, c'est-à-dire la couche de PET, déborde des feuilles de verre 2 et 3. La mise en forme des couches constituant le film composite est avantageusement réalisée au moment de l'assemblage des constituants du vitrage. En fait, suivant le choix des couches qui débordent ou non, une ou plusieurs couches peuvent être découpée avant le calandrage, après le calandrage ou l'autoclave.

Selon le mode de réalisation représenté, seule la couche rigide du film composite 4 déborde. Elle présente une résistance à l'élongation de 8% et un module d'Young de 15 MPa.

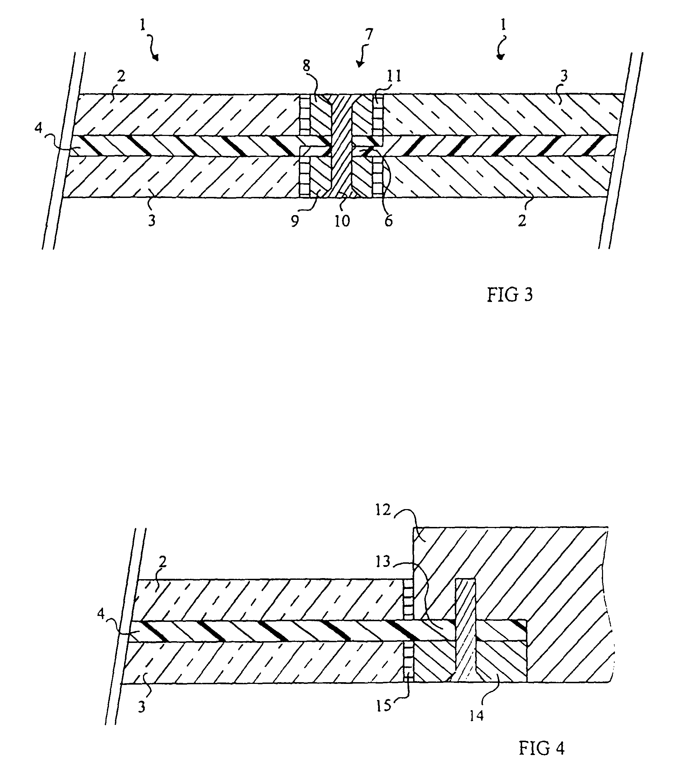

Les figures 3, 4, 5 et 6 représentent différents modes de réalisation de l'invention.

La figure 3 représente deux vitrages feuilletés 1 fixés l'un à l'autre. Selon cette représentation, l'épaisseur des parties débordantes 6 du film composite 4 est égale à la moitié de l'épaisseur totale du film composite 4 et les parties débordantes 6 sont affleurantes à la feuille de verre 2. Les vitrages feuilletés 1 sont assemblés de manière à ce que les parties débordantes 6 se superposent et que les deux vitrages 1 soient dans un unique plan.

Les parties débordantes sont alors fixées l'une à l'autre par l'intermédiaire d'une pièce métallique 7 constituée de deux éléments 8 et 9 complémentaires et fixés l'un à l'autre par une vis 10. Les pièces 8 et 9 sont de dimensions telles que la pièce métallique 7 affleure les bords des vitrages feuilletés 1 et des joints 11 de type silicone ou polysulfure sont disposés entre les éléments 8 et 9 de la pièce métallique 7 et les bords des feuilles de verre 2 et 3 de manière à étanchéifier l'ensemble.

De cette manière, il est possible de fixer deux vitrages l'un à l'autre, les films composites 4 reprenant le poids des vitrages feuilletés 1 par les parties débordantes 6.

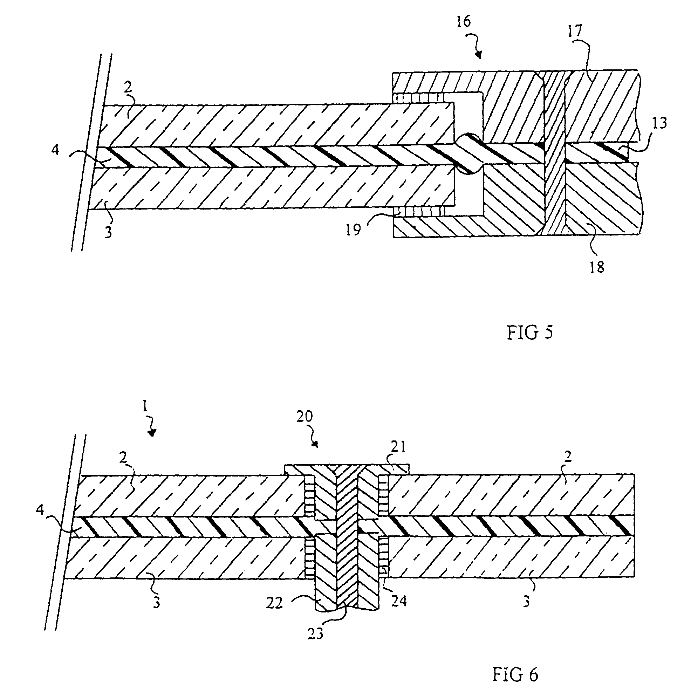

Les figures 4 et 5 représentent un vitrage feuilleté 1 destiné à être fixé une structure porteuse 12 de type châssis ou gros oeuvre. Selon ces représentations, l'épaisseur de la partie débordante 13 est égale à l'épaisseur totale du film composite.

Selon la représentation de la figure 4, la partie débordante 13 est appliquée sur la structure porteuse 12 et y est fixé par l'intermédiaire d'une pièce métallique 14 visée directement sur la structure porteuse 12. De manière à étanchéifier le montage, des joints 15 de type silicone ou polysulfure sont disposés entre les bords des feuilles de verre 2 et 3 et la structure porteuse 12 et la pièce métallique 14.

Selon la représentation de la figure 5, la partie débordante 13 est prise en sandwich dans une pièce métallique 16 constituée de deux éléments 17 et 18 collés respectivement au bords des feuilles de verre 2 et 3. Le collage est réalisé par exemple à l'aide de joints 19 de silicone. La pièce métallique 16 est positionnée de manière à ne pas tendre la partie débordante 13 sortant de l'assemblage feuilleté et de manière à maintenir par pression la partie débordante 13 qui est positionnée entre les deux éléments 17 et 18. La pièce métallique 16 sert alors de liaison entre le vitrage 1 et la structure porteuse ici non représentée.

La figure 6 représente un vitrage feuilleté 1 de type Vitrage Extérieur Attaché (VEA) avec systèmes d'attaches ponctuelles, chaque attache ponctuelle étant articulée à une structure porteuse ici non représentée.

Selon cette représentation, les feuilles de verre 2 et 3 sont percées de manière à ce que les perçages soient en vis à vis lors de l'assemblage du vitrage feuilleté 1 et le film composite 4 déborde à l'intérieur du perçage.

La partie débordante dans le perçage est alors prise en sandwich dans une pièce métallique 20 de fixation, ici représentée seulement en partie. Cette pièce métallique 20 est constituée de deux éléments 21 et 22 disposés respectivement au niveau des perçages des feuilles de verre 2 et 3 et assemblés à l'aide d'une vis 23 qui permet de pincer le film intercalaire 4 débordant par compression. L'étanchéité au niveau des bords des perçages est réalisé à l'aide de joints 24 de type silicone ou polysulfure.

Les éléments 21 et 22 peuvent être dimensionnés de manière telle que la pièce métallique 20 soit affleurante à la feuille de verre 2. Ces éléments peuvent également être de forme conique. Dans ce cas, le perçage des feuilles est réalisé de manière conique et l'étanchéité est réalisée à l'aide de rondelles coniques.

De cette manière, on augmente la résistance mécanique de l'attache grâce à la reprise du fil composite 4.

Les différents modes de réalisations précédemment décrits permettent avantageusement d'obtenir des vitrages feuilletés de sécurité dont la principale caractéristique consiste à éviter la chute du vitrage en cas de casse d'une des feuilles de verre 2 ou 3 et/ou d'affaiblissement de la fixation du vitrage.

L'invention ne se limite pas à ces types particuliers de réalisation et doit être interprétée de façon non limitative et englobant tout type de vitrage feuilleté constitué d'au moins un panneau transparent associé à un film composite constitué d'au moins une couche d'un matériau organique thermoplastique ou thermodurcissable, le vitrage feuilleté étant tel qu'au moins une couche du film composite déborde sur au moins une partie d'au moins un côté ou perçage du panneau transparent.

Ainsi tout type de panneau transparent entre dans le cadre de l'invention comme il a était précédemment spécifié.

De même, l'invention ne se limite pas à une application vitrage pour la constitution de façade de bâtiment, mais elle doit être interprétée de façon non limitative et englobant toute application destinée à protéger les bâtiments et les véhicules et, en particulier, les applications relatives aux renforcements de la sécurité des vitrages feuilletés et au contrôle solaire.

## Revendications

1. Vitrage feuilleté constitué d'au moins un panneau transparent associé à un film composite constitué d'au moins une couche d'un matériau organique thermoplastique ou thermodurcissable, **caractérisé en ce qu**'au moins une couche du film composite déborde sur au moins une partie d'au moins un côté ou perçage du panneau transparent.

2. Vitrage feuilleté selon la revendication 1, **caractérisé en ce que** le film composite comporte au moins une couche rigide associée au panneau transparent par l'intermédiaire de la couche de matériau organique.

3. Vitrage feuilleté selon la revendication 2, **caractérisée en ce que** la couche rigide a une résistance à l'élongation comprise entre 1 et 500%, ayant un module d'Young au moins égal à 0,1 MPa.

4. Vitrage feuilleté selon la revendication 2 ou 3, **caractérisé en ce que** la couche rigide est constituée d'une feuille de matériau thermoplastique tel qu'à base de polytéréphtalate d'éthylène ou de polypropylène.

5. Vitrage feuilleté selon la revendication 2 ou 3, **caractérisé en ce que** la couche rigide est constituée d'une feuille métallique.

6. Vitrage feuilleté selon l'une des revendications 2 à 5, **caractérisé en ce que** seule la couche rigide du film composite déborde du panneau transparent.

7. Vitrage feuilleté selon l'une des revendications précédentes, **caractérisé en ce que** la partie du film composite débordant du panneau transparent est comprise entre 2 et 2000 mm et, de préférence, entre 4 et 25 mm.

8. Vitrage feuilleté selon l'une des revendications précédentes, **caractérisé en ce que** le vitrage est constitué d'au moins deux panneaux transparents séparés par le film composite.

9. Vitrage feuilleté selon l'une des revendications précédentes, **caractérisé en ce qu**'au moins une pièce destinée à la fixation reliant le vitrage à une structure porteuse et/ou à un vitrage voisin est fixée au moins aux parties débordantes du film composite.

10. Vitrage feuilleté selon la revendication 9, **caractérisé en ce que** la pièce de fixation est fixée, en outre, sur au moins un bord d'au moins un panneau transparent.

11. Vitrage feuilleté selon la revendication 10, **caractérisé en ce que** la partie débordante du film composite est non tendue.

12. Vitrage feuilleté selon la revendication 10 ou 11, **caractérisé en ce que** la pièce de fixation est constituée de deux pièces positionnées de part et d'autre des parties débordantes du film composite et au moins une des deux pièces est collée au bord d'un panneau transparent.

13. Application du vitrage feuilleté selon l'une des revendications précédentes en tant que vitrages pour la constitution de façade de bâtiments.

14. Application du vitrage feuilleté selon l'une des revendications 1 à 12 en tant que vitrages pour véhicules automobiles.
